# EUROPEAN PATENT SPECIFICATION

(11) **EP 2 143 597 B1**
(45) Date of publication and mention of the grant of the patent: **21.08.2013**
(21) Application number: 09164862.6
(22) Date of filing: 08.07.2009
(51) Int. Cl.: B60R 22/48, B60R 22/34

(54) **Seatbelt device of vehicle**
Fahrzeugsitzgurtvorrichtung
Dispositif de ceinture de sécurité et véhicule

(30) Priority: 09.07.2008 JP 2008179178
(43) Date of publication of application: 13.01.2010
(73) Proprietor: Honda Motor Co., Ltd., Minato-ku Tokyo 107-8556 (JP)
(72) Inventor: Odate, Shotaro, Saitama 351-0193 (JP)
(74) Representative: Herzog, Markus

(56) References cited:
- EP-A- 1 524 159
- EP-A- 1 707 455

## Description

### BACKGROUND OF THE INVENTION

The present application claims priority on Japanese Patent Application No. 2008-179178, published as JP 2010018103, filed July 9, 2008.

### FIELD OF THE INVENTION

The present invention relates to a seatbelt device of a vehicle.

### DESCRIPTION OF THE RELATED ART

Seatbelt devices equipped in vehicles are structured so that a belt used to tie down a passenger is rolled up in a belt reel within a retractor, and is pulled out from the retractor when the belt is worn by the passenger, a seatbelt device according to the preamble of claim 1 is known from EP 1 707 455 A. According to a known seatbelt device of this type, a belt can be retracted using both an energizing force of a spring and a driving force of a motor. Further, when it is detected that a buckle of the seatbelt device is unfastened, the belt is rolled up by the motor, and is stored in the retractor (refer to, for example, Japanese Unexamined Patent Application, First Publication No. 2006-27587).

Further, according to another known seatbelt device, when a passenger detection device detects that a passenger is no longer inside a vehicle, or when a door switch detects that a door has been opened, or when an engine key switch detects that an engine key has been pulled out or that the switch has been turned off, the belt is rolled up again by the motor. As a result, the belt is rolled up with certainty and is stored in the retractor (refer to, for example, Japanese Unexamined Patent Application, First Publication No. 2001-163186).

Further, another known seatbelt device of a vehicle is organized such that, during an emergency concerning the vehicle in which a collision is estimated and the like, a belt is rolled up using a motor, and a passenger is tied down (Refer to, for example, Japanese Unexamined Patent Application, First Publication No. 2005-28970).

Incidentally, seatbelt devices of vehicles, which are structured so that a belt reel can be rotated by a motor's driving force, usually includes a clutch that makes it possible to cut off a transmission of the driving force between the motor and the belt reel when the motor's driving force is not needed, for instance, when the belt is pulled out.

In such a case, when using a clutch structured to engage and disengage by a relative rotation of a belt reel and a motor, the clutch cannot engage unless the motor rotates in a direction in which the belt is rolled up and in a rotational speed faster than that of the belt reel.

An example is a seatbelt device structured so that a belt can be pulled in using both a spring's energizing force and a motor's driving force. According to this seatbelt device, when a passenger moves a belt's tongue closer to a door (to the side of an outer-anchor) and the like while the belt is being rolled up, a rotational velocity in the direction in which a belt reel is being rolled up by a spring's elasticity sometimes becomes greater than a rotational velocity in the direction in which a belt reel is being rolled up by a motor control.

In such a case, the clutch cannot be engaged. As a result, the motor's driving force cannot be transmitted effectively. Consequently, the belt will not be rolled up by the motor's driving force, but instead, the belt will be rolled up by the spring's elasticity. Meanwhile, the clutch tries to engage using the motor's driving force. Therefore, the clutch repeats a motion of disengaging and engaging, which induces a slapping sound. Accordingly, there is a possibility of a decline in the merchantability of the seatbelt device.

Considering the problems described above, an object of the present invention is to provide a seatbelt device of a vehicle that can operate in a quieter manner when a motor's driving force is not transmitted to the belt reel while a belt is stored.

### SUMMARY OF THE INVENTION

In order to achieve the above object, the present invention employs the following.

Namely, a seatbelt device of a vehicle (hereinafter referred to as "seatbelt device") according to an aspect of the present invention includes: a belt reel (12) around which a belt (5) is rolled up; a motor (10) which is driven to rotate the belt reel (12) so that the belt (5) can be pulled in; a clutch (20) located between the belt reel (12) and the motor (10); a control unit (21) that controls the motor (10); a rotational position detection unit (37) that detects a rotational position of the belt reel (12); and a belt wearing state determination unit (35) that determines how the belt (5) is worn, wherein as the motor (10) rotates relative to the belt reel (12) in a direction of rolling up the belt (5), the clutch (20) engages and transmits a driving force of the motor (10) to the belt reel (12); as the motor (10) rotates relative to the belt reel (12) in a direction of pulling out the belt (5), the clutch (20) releases and stops transmitting the driving force; the seatbelt device (1) stores the belt (5) by driving the motor (10) while the belt wearing state determination unit (35) detects that the belt (5) is not worn; and when the control unit (21) is controlling the storing of the belt (5), the control unit (21) stops driving the motor (10) in the direction of rolling up the belt (5) in the case where the rotational position detection unit (37) detects a velocity of rolling up the belt (5) that is greater by a predetermined value or more compared to a velocity at which the motor (10)'s driving force rolls up the belt (5).

Based on the seatbelt device according to the aspect of the present invention described above, when a velocity of the belt's roll up detected by the rotational position detection unit is greater by a predetermined value or more compared to a velocity of the belt's roll up by the motor's driving force, the clutch can be disengaged with certainty.
As a result, the clutch's repetitive motion of engaging and disengaging can be prevented. Further, it is possible to prevent the triggering of hitting sounds and the like. Thus, the merchantability of the seatbelt device can be enhanced.

In addition, a seatbelt device according to an aspect of the present invention may be configured as follows: the control unit (21) drives the motor (10) so that the motor (10) rotates in an opposite direction after the control unit (21) suspends the rotation of the motor (10) in the direction in which the belt (5) is rolled up.

Based on the seatbelt device according to the aspect of the present invention described above, when a velocity of the belt's roll up detected by the rotational position detection unit is greater by a predetermined value or more compared to a velocity of the belt's roll up by the motor's driving force, the clutch can be moved in a direction in which the clutch is released. Accordingly, it is possible to prevent the clutch's repetitive motion of engaging and disengaging with certainty.

### BRIEF DESCRIPTION OF THE DRAWINGS

FIG. 1 is a configuration diagram of a seatbelt device according to an embodiment of the present invention.
FIG. 2 is a block diagram of a motor control of a seatbelt device according to the above embodiment of the present invention.
FIG. 3 is a rough configuration diagram of a side view of a power transmission system of a seatbelt device according to the above embodiment of the present invention.
FIG. 4 is a rough configuration diagram of an anterior view of the above power transmission system.
FIG. 5 is a diagram showing an expanded view of a portion of the above power transmission system.
FIG. 6 is a flowchart showing a main routine to control a storing of a belt of a seatbelt device according to an embodiment of the present invention.
FIG. 7 is a flowchart showing a control during a launching of a seatbelt device according to an embodiment of the present invention.
FIG. 8 is a flowchart showing a monitoring control of a state of buckling of a seatbelt device according to an embodiment of the present invention.
FIG. 9 is a flowchart showing a storage control of a seatbelt device according to an embodiment of the present invention.
FIG. 10 is a mapping of a target angular velocity of roll up during the above storage control.

### DETAILED DESCRIPTION OF THE PREFERRED EMBODIMENTS

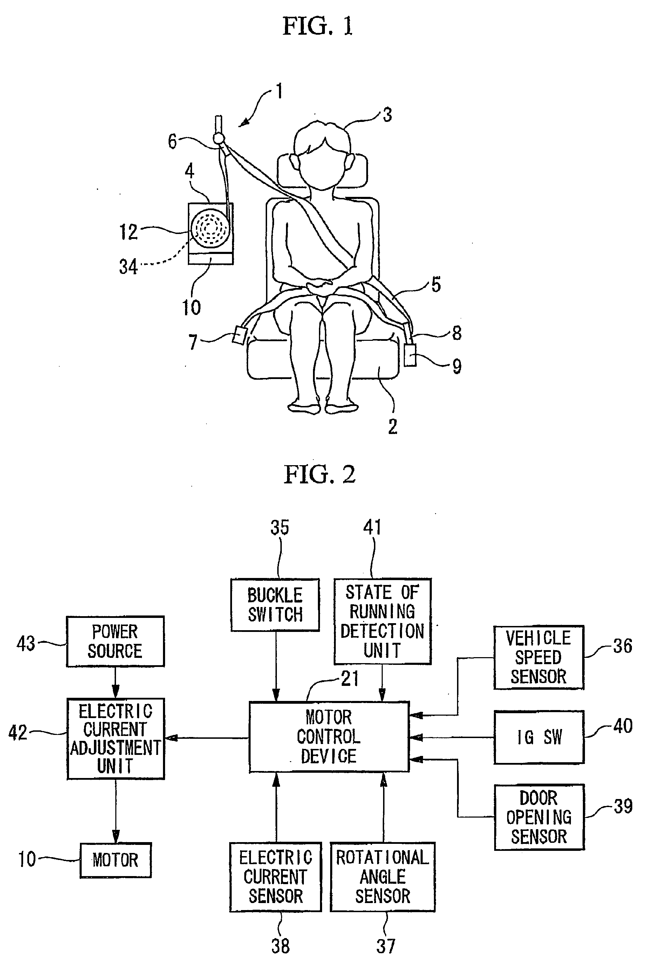

Hereunder, an embodiment of a seatbelt device according to the present invention is described with reference to FIG. 1 to 10.

FIG. 1 shows an overall configuration of a seatbelt device 1 according to the present invention. The seatbelt device 1 ties down a passenger 3 who is sitting on a seat 2. The seatbelt device 1 is a seatbelt device generally known as a three-point type seatbelt. A belt 5 is pulled upwards from a retractor 4 installed on a center pillar (not diagrammed). The belt 5 is passed through a through anchor 6 supported by an upper portion of the center pillar. A tip of the belt 5 is fixed to a floor of a vehicle body via an outer anchor 7 located on the seat 2 positioned towards the outer side of the vehicle's interior. A tongue plate 8 is passed through between the through anchor 6 of the belt 5 and the outer anchor 7. The tongue plate 8 can be attached to or be detached from a buckle 9 fixed to the floor of the vehicle body of the seat 2 towards the inner side of the vehicle's interior.

The buckle 9 includes a buckle switch 35 (unit that determines a state of belt wearing) (refer to FIG. 2). The buckle switch 35 is turned ON when the tongue plate 8 is engaged with buckle 9. The buckle switch 35 is turned OFF when the tongue plate 8 is disengaged from buckle 9.

The belt 5 is structured so that the belt 5 can be pulled in by a spring 34 of the retractor 4 and a motor 10. In an initial state, the belt 5 is rolled up by a belt reel 12 of the retractor 4. When the passenger 3 pulls out the belt 5 with his or her hand and attaches the tongue plate 8 to the buckle 9, the belt 5 ties down primarily the passenger 3's chest and abdomen against the seat 2. When the passenger 3 detaches the tongue plate 8 from the buckle 9 (may hereinafter be referred to as "detaching the buckle 9"), and when the buckle switch 35 is turned OFF, the belt 5 is rolled up by the spring 34 and the motor 10, and is stored in the retractor 4.

Further, the seatbelt device 1 is structured so that, during times of emergency such as a collision, the motor 10 urgently pulls in the belt 5 so that the passenger is tied down more strongly. This motor 10 is included in a pretention mechanism.

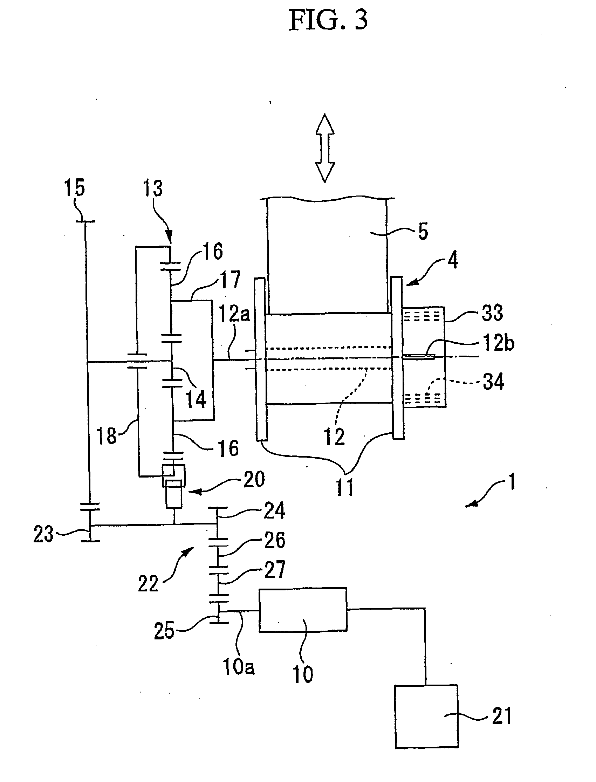

The retractor 4 is structured so that, as shown in FIGS. 3 to 5, the belt 5 is rolled up in the belt reel 12 which is supported by a casing 11 so that the belt reel 12 can rotate. Further, a deceleration mechanism 13 with planetary gear engages with the belt reel 12's axis 12a which protrudes from one side of an edge of the casing 11. The deceleration mechanism 13 is linked to the motor 10's rotational axis 10a via a motor-side power transmission system 22 which includes multiple groups of gear wheel. Further, the spring 34 engages with the belt reel 12's axis 12b which protrudes from the other side of the casing 11 towards the inside of a spring case 33. The belt reel 12 is biased by this spring 34 in the direction in which the belt is rolled up.

The deceleration mechanism 13 is structured so that a sun gear 14 is integrated with an external gear 15 used to input the drive. At the same time, a carrier 17 supporting multiple planetary gears 16 is connected to the belt reel 12's axis 12a. Thus, multiple ratchet teeth 19 are formed on side of the outer circumference of a ring gear 18 which engages with a planetary gear 16. This ratchet tooth 19 is included as one part of a clutch 20 described later. When appropriate, this clutch 20 connects and disconnects the power transmission system between the motor 10 and the belt reel 12 based on a control by a motor control device 21.

The motor-side power transmission system 22 includes a first connect gear 23 with a small radius, which constantly engages with the external gear 15 integrated with the sun gear 14, a second connect gear 24 with a large radius, which is set up to rotate with the first connect gear 23 as an integrated whole on a same axis, a first idle gear 26 and a second idle gear 27, both of which are located between the second connect gear 24 and a motor gear 25 (integrated with the motor 10's rotational axis 10a) and are constantly engaged so that power can be transmitted. The driving force of the motor 10 in a direction of a normal rotation is transmitted to the second connect gear 24 and the first connect gear 23 via gears 25, 27, and 26 respectively, as shown by a solid arrow in FIG 3. Further, the driving force is transmitted to the sun gear 14 via the external gear 15. Then, the driving force is transmitted to the belt reel 12 via the planetary gear 16 and the carrier 17. This driving force of the motor 10 in a direction of a normal rotation rotates the belt reel 12 in a direction in which the belt 5 is pulled in (in other words, in a direction in which the belt 5 is rolled up). The driving force transmitted from the sun gear 14 to the planetary gear 16 is transmitted entirely to the side of the carrier 17, as described above, when the ring gear 18 is fixed. Meanwhile, when the ring gear 18 can rotate freely, the ring gear 18 idles away due to the planetary gear 16 rotating on its own axis. The clutch 20 turns on or off a transmission of the motor's driving force to the belt reel 12 (carrier 17) by controlling the locking and unlocking of the ring gear 14's rotation.

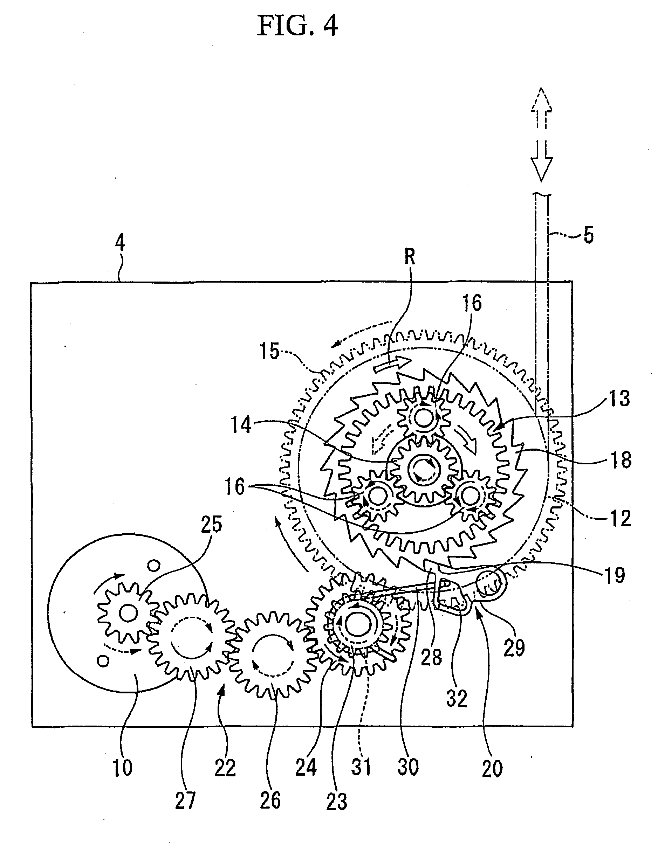

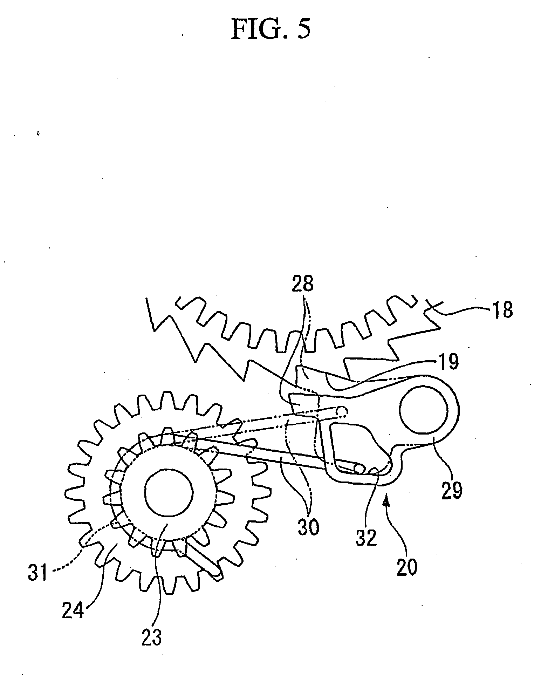

Next, the clutch 20 is described with reference to FIGS. 4 and 5.

The clutch 20 is supported by a casing (not diagramed) so that the clutch can turn. The following components are included in the clutch 20: a pawl 29 that has a locking click 28 on its tip, a clutch spring 30 that operates this pawl 29, and the ratchet tooth 19 of the ring gear 14 that can engage with the locking click 28 of the pawl 29. When the pawl 29 is manipulated in the direction of the ratchet tooth 19, the locking click 28 hits a plane that is approximately orthogonal to a sloped surface of the ratchet tooth 19. In this way, the locking click 28 locks a rotation of the ring gear 14 in one direction.

Further, a base of the clutch spring 30 is curved forming an arc. The curved part 31 is locked such that the curved part 31 is wrapped to the outer circumference of an axis of the first connect gear 23. Further, a tip of the clutch spring 30 is elongated in the direction of the pawl 29, and engages with an access window 32 of the pawl 29. The curved part 31 of the clutch spring 30 engages with an axis of the first connect gear 23 because of friction. When a torque greater than or equal to a predetermined value operates between the first connect gear 23, the torque causes a slipping between the first connect gear 23.

Therefore, the clutch 20 is structured so that, when the motor 10 rotates in a direction of a normal rotation (refer to the solid arrow shown in FIG. 4), the clutch spring 30 changes its position from that shown in a solid line in FIG. 5 to the position shown in a dotted line. As a result, the locking click 28 of the pawl 29 engages with the ratchet tooth 19 as shown in FIG. 4, and locks the rotation of the ring gear 18. At this time, the ratchet tooth 19 is slanted in one direction of the rotation. Thus, the ratchet tooth 19 can reliably lock the rotation of the ring gear 18 in one direction. However, when the ring gear 18 tries to rotate in the opposite direction, a force greater than or equal to a certain magnitude is necessary so that the ratchet tooth 19 can push up the locking click 28. Accordingly the clutch spring 30 applies a resistance force greater than or equal to a certain magnitude to a rotation of the ring gear 18 in the opposite direction.

When a rotation of the ring gear 18 is locked in this way, a rotational force that was transmitted to the sun gear 14, as described above, is now transmitted entirely to the belt reel 12 as a rotation of the carrier 17 (referred to as state of clutch engaging).

Meanwhile, when the motor 10 rotates in an opposite direction from this state of clutch engaging, the first connect gear 23 rotates in a manner shown in a dotted arrow in FIG. 4. Further, the clutch spring 30 moves in a manner shown in a solid line in FIG. 5. Thus, the locking click 28 of the pawl 29 is detached from the ratchet tooth 19, and the ring gear 18 is unlocked.

When the ring gear 18 is unlocked in this way, the rotational force transmitted to the sun gear 14 as described above makes the planetary gear 16 rotate on its own axis. At this time, the ring gear 18 idles away so that power will not be transmitted to the side of the carrier 17 (belt reel 12) (referred to as state of clutch released).

Next, a control by the motor 10 is described with reference to a control block diagram shown in FIG. 2.

The motor 10 is controlled by the motor control device 21. The motor 10 is driven to roll up the belt 5 when the buckle 9 is released. In addition, the motor 10 is driven to apply a certain tension to the belt 5 or to support the passenger at a certain position when a state of running detection unit 41 detects a certain state of the vehicle's running condition (for example, when an output value of a sensor that detects a physical value concerning the vehicle's movement such as the vehicle's acceleration in a longitudinal or horizontal direction of the vehicle exceeds a certain threshold value, or when a change in the running environment of the vehicle is detected based on information transmitted from navigation systems and the like). The motor 10 is also driven to remove any deflection of the belt 5 created while the vehicle is running.

The motor control device (control unit) 21 receives inputs of an output signal of the buckle switch 35 described above, an output signal of a vehicle speed sensor 36 that detects the speed of the vehicle, an output signal of a rotational angle sensor (rotational position detection unit) 37 that detects a rotational position of the belt reel 12, an output signal of an electric current sensor 38 that detects an electric current which flows through the motor 10, an output signal of a door opening sensor 39 which is ON when a door (not diagramed) located near the seatbelt device 1 is opened and is OFF when the door is closed, and an output signal of the ignition switch (IG SW) 40 and the like. Further, a warning trigger is inputted to the motor control device 21 when the state of running detection unit 41 detects certain states of running described above. Based on these input signals, the motor control device 21 sets up the timing of the driving and halting of the motor 10 as well as a target electric current, and outputs the signals to an electric current adjustment unit 42.

Based on command signals inputted from the motor control device 21, the electric current adjustment unit 42 adjusts the timing of the driving and halting of the motor 10 as well as the amount of electric current flowing through the motor 10. In this way, the electric current adjustment unit 42 supplies electric power from a power source 43 to the motor 10.

According to the seatbelt device 1 structured in this way, when the tongue plate 8 is released from the buckle 9 and the buckle switch 35 is turned OFF, the motor 10 is driven to rotate in a direction of normal rotation as described above. In addition, the belt reel 12 is driven to rotate in a direction in which the belt is rolled up. Thus, the belt 5 is rolled up and is stored in the retractor 4. Here, when the passenger detaches the tongue plate 8 from the buckle 9 and later moves his or her hand away from the tongue plate 8, a resistance occurs while the belt 5 is being rolled up because of, for example, the weight of the belt 5 and the tongue plate 8, or because of the friction that occurs between components that the belt 5 and the tongue plate 8 are in contact with. According to the seatbelt device 1, the rolling up of the belt is assisted by the motor 10's driving force in addition to the spring 34's springing force so that the belt 5 can be rolled up while overcoming the resistance that occurs while the belt 5 is being rolled up.

However, the resistance decreases when, for example, the passenger moves the tongue plate 8 towards the door (towards the outer anchor 7) while still holding on to the tongue plate 8 with his or her hand after the passenger removes the tongue plate 8 from the buckle 9. As a result, it is possible to use only the springing force of the spring 34 to rotate the belt reel 12 in the direction in which the belt is being rolled up. Consequently, the rotational speed of the belt reel 12 becomes greater than the rotational speed at which the belt reel 12 is rotated using the motor 10's driving force.

When the rotational speed of the belt reel 12 exceeds the velocity at which the motor 10's driving force performs the roll up in this way, a rotational force by the spring 34 in a direction of rewinding is transmitted to the rink gear 18 via the belt reel 12, the carrier 17 of the deceleration mechanism 13, and the planetary gear 16. Thus, the rink gear 18 is rotated in a direction "R" shown as an arrow in FIG. 4. As a result, the clutch 20 is disengaged. Therefore, the transmission route of the motor 10°s driving force does not become active. Further, the belt 5 is no longer rolled up by the motor 10's driving force. Instead, the belt 5 is rolled up by the spring 34's springing force.

However, as long as the motor 10 is in a state of normal rotation, the clutch spring 30 of the clutch 20 biases the locking click 28 of the pawl 29 in one direction so that the locking click 28 becomes closer to the ratchet tooth 19 of the rink gear 18.

Thus, the locking click 28 and the ratchet tooth 19 continues to be in contact with one another. When the rink gear 18 rotates in the direction "R," the locking click 28 moves beyond the ratchet tooth 19, falls off, and hits the next ratchet tooth 19. At this instant, a hitting sound may be triggered. Such hitting sounds leads to a decrease in merchantability.

Therefore, according to the seatbelt device 1, when the rotational velocity of the belt reel 12 is greater by a certain magnitude or more compared to the rolling up velocity of the motor 10's driving force, the motor 10's rotation in the direction of normal rotation is suspended. This suspension of the motor 10's rotation releases the biasing force of the clutch spring 30 which is biasing the pawl 29 in one direction so that the pawl 29 moves closer to the rink gear 18. Further, the locking click 28 is prevented from moving back towards the ratchet tooth 19. As a result, the hitting sound described above is prevented, contributing to an increase in merchantability.

Furthermore, according to the present embodiment, the motor 10 is rotated backwards after the normal rotation of the motor 10 is suspended. As a result, the clutch spring 30 is moved to a position shown in a solid line in FIG. 5. Further, the clutch 20 is released by moving the pawl 29 to a position shown in a solid line in FIG. 5. Consequently, the locking click 28 and the ratchet tooth 19 is separated from each other with certainty so that the locking click 28 and the ratchet tooth 19 are not in contact with one another. Thus, the hitting sound is prevented in a more reliable manner. In addition, it is possible to lessen the rotational resistance of the rink gear 18.

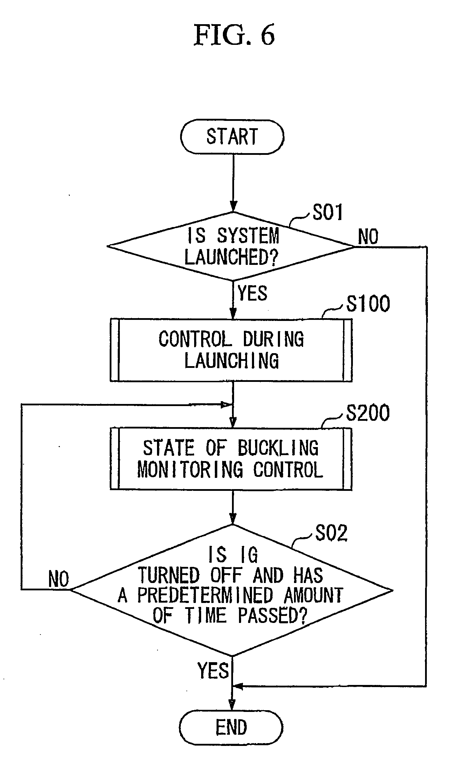

Next, a belt storage control according to the present embodiment is described with reference to the flowchart shown in FIGS. 6 to 9.

The flowchart in FIG. 6 shows a main routine to control the storage of the belt. This main routine to control the storage of the belt is executed by the motor control device 21.

First, in step S01, it is determined whether or not a system of the seatbelt device 1 has been launched. For example, when a door of the vehicle that has been closed is opened, a power source of a control unit of the seatbelt device 1, is turned ON, and the system is launched.

When the result of step S01 is NO, the execution of the routine is terminated.

When the result of step S01 is YES, the routine proceeds to step S100, and a control during the launching is executed. The control during launching is the control to store the belt 5 when the system is launched, the details of which are described later.

Next, the routine proceeds to step S200, and a control to monitor the state of the buckle (hereinafter referred to as "state of buckling monitoring control") is executed.
The state of buckling monitoring control is a control to store the belt 5, which is executed after the system is launched. The state of buckling monitoring control is executed according to the state of the buckle 5, the details of which are described later.

Next, the routine proceeds to step S02. It is determined whether the ignition switch is turned OFF and whether or not a predetermined amount of time has passed since the ignition switch was turned OFF.

When the result of step S02 is NO, the routine returns to step S200, and the state of buckle monitoring control continues to be executed. Thus, even if the ignition switch is turned OFF, the state of buckle monitoring control is executed until the predetermined amount of time has passed.

If the result of step S02 is YES, the execution of the routine is terminated.

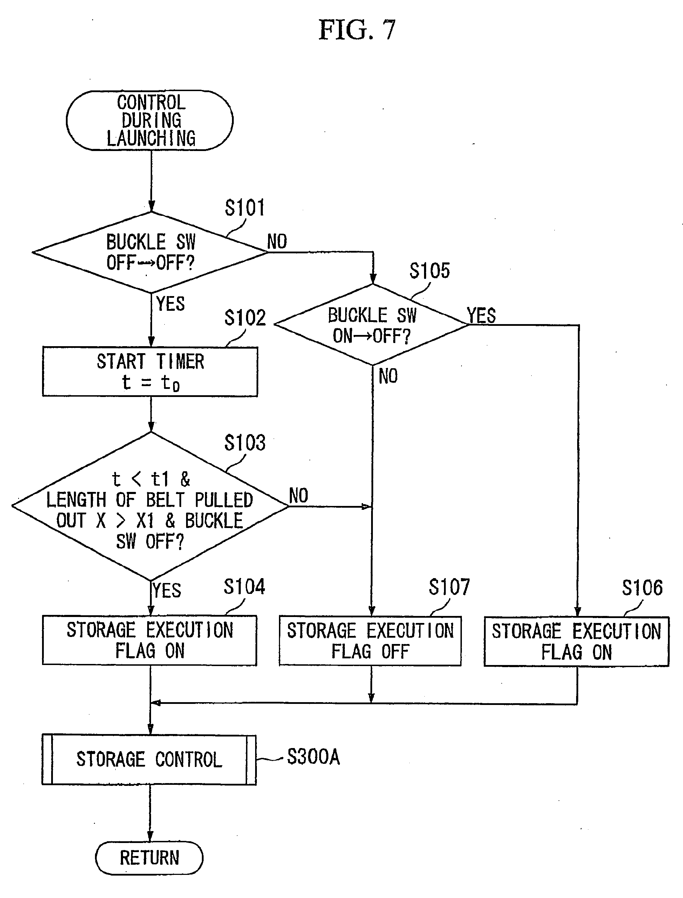

Next, the control performed during launching as indicated in step S100 of the flowchart in FIG. 6 is described with reference to the flowchart in FIG. 7. A routine of the control performed during launching, as shown in FIG. 7, is executed repeatedly by the motor control device 21.

First, in step S101, it is determined [1] whether the state of the buckle switch (buckle SW) 35, which was stored when the system of the seatbelt device 1 was terminated the last time, is OFF and [2] whether the state of the buckle switch 35 when the system is launched this time is OFF (OFF→OFF).

When the result of step S101 is YES, the routine proceeds to step S102. The timer is initialized (t = t0), and the timekeeping of time t begins. Time t is the time that has passed since the seatbelt device 1 was launched.

Next, the routine proceeds to step S103. It is determined [1] whether the time t that has passed since the seatbelt device 1 was launched is less than or equal to a predetermined amount of time t1 and [2] whether the length X of the belt 5 that was pulled out from the position where the entire belt is rolled up is greater than a predetermined length X1 and [3] whether the buckle switch 35 is turned OFF.

When the result of step S103 is YES (all three conditions are satisfied), it is necessary to momentarily roll up the belt 5 before the passenger wears the belt 5 to the position where the entire belt is rolled up. Thus, the routine proceeds to step S104, and the flag representing the execution of the storage is turned ON.

On the other hand, when the result of step S101 is NO, the routine proceeds to step S105. It is determined [1] whether the state of the buckle switch 35, which was stored when the system of the seatbelt device 1 was terminated the last time, is ON and [2] whether the state of the buckle switch 35 when the system is launched this time is OFF (ON→OFF).

When the result of step S105 is YES, the routine proceeds to step S106. The flag representing the execution of the storage is turned ON. This step is performed because it is highly likely that the system was launched this time in a condition in which the belt 5 was pulled out, and therefore it is necessary to roll up the belt 5 momentarily to a position where the entire belt is rolled up before the passenger wears the belt 5.

When the result of step S103 is NO and the result of step S105 is NO, the routine proceeds to step S107. The flag representing the execution of the storage is turned OFF.

Then, the routine proceeds from steps S104, S106, and S107 to step S300A. The storage control is executed, and the routine is returned. The storage control is described in detail later on.

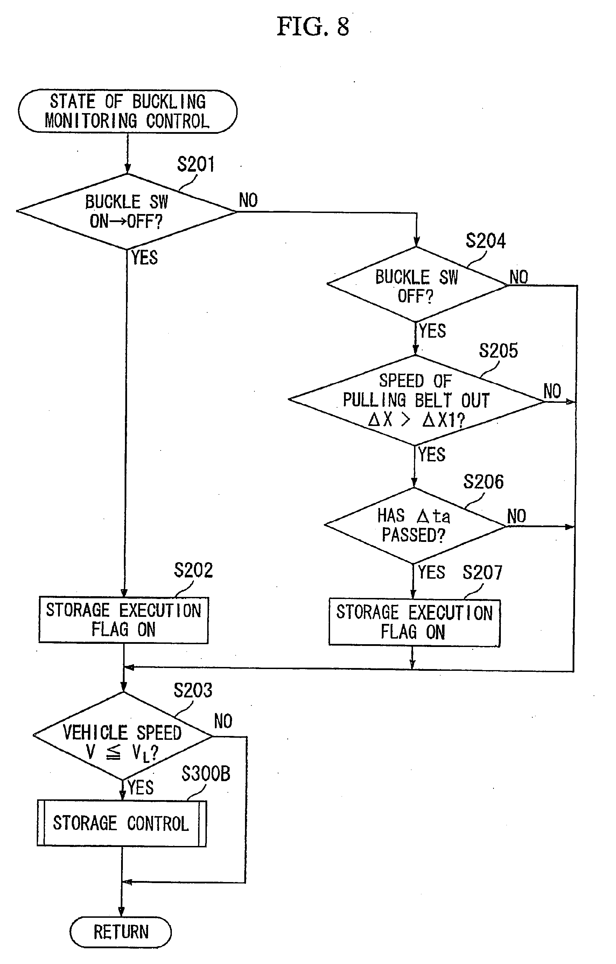

Next, the state of buckling monitoring control which is performed as indicated in step S200 in the flowchart in FIG 6 is described with reference to the flowchart shown in FIG. 8. The routine of the state of buckling monitoring control shown in FIG. 8 is executed repeatedly by the motor control device 21.

First, in step S201, it is determined whether or not the buckle switch 35 changed from ON to OFF.

When the result of step S201 is YES, the routine proceeds to step S202 because it is necessary to roll up the belt 5 to the position where the entire belt is rolled up. The flag representing the performance of storing the belt is turned ON. The routine proceeds to step S203.

When the result of step S201 is NO, the routine proceeds to step S204. It is determined whether or not the buckle switch 35 is turned OFF.

If the result of step S204 is YES (the buckle switch is turned OFF), the routine proceeds to step 205. It is determined whether or not the velocity ΔX of pulling out the belt 5 is greater than a predetermined value ΔX1. The velocity ΔX of pulling out the belt 5 is computed based on the output signal of the rotational angle sensor 37.

When the result of step S205 is YES (ΔX > ΔX1), the routine proceeds to step S206. It is determined whether or not the velocity ΔX of pulling out the belt 5 has been greater than the predetermined value ΔX1 continuously for a predetermined amount of time (Δta).

When the result of step S206 is YES (time Δta has passed), the routine proceeds to step S207. The flag representing the performance of storing the belt is turned ON. The routine then proceeds to step S203. In other words, in this case, even though the belt 5 is pulled out at a predetermined velocity, the buckle switch 35 is not turned ON during the predetermined amount of time Δta. Therefore, it is determined that the control to store the belt (hereinafter referred to as "belt storage control") should be executed.

When the result of step S204 is NO (the buckle switch is turned ON) and the result of step S205 is NO (ΔX ≤ ΔX1), the routine proceeds to step S203 even when the result of step S206 is NO (less than Δta).

In step S203, it is determined whether or not a vehicle speed V is less than or equal to a predetermined value V_{L}.

When the result of step S203 is YES (V ≤ V_{L}), the routine proceeds to step S300B. The control to store the belt is performed, and the routine returns. The belt storage control is described in detail later on.

On the other hand, when the result of step S203 is NO (V > V_{L}), the belt storage control should not be executed because the vehicle speed V is greater than the predetermined value V_{L}. Therefore, the routine returns without processing step S300B.

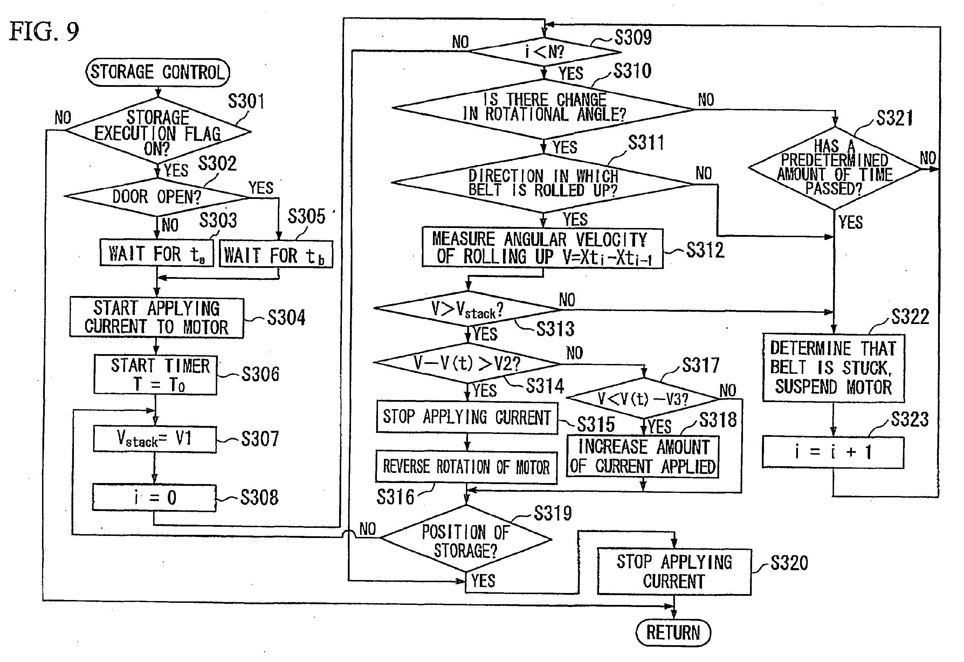

Next, the belt storage control which is performed as indicated in step S300A of the flowchart in FIG. 7 and in step S300B of the flowchart in FIG. 8 is described with reference to the flowchart in FIG. 9. The routine of the belt storage control as shown in FIG. 9 is executed repeatedly by the motor control device 21.

First, in step S301, it is determined whether or not the flag representing the performance of storing the belt is turned ON.

If the result of step S301 is NO (the flag representing the performance of storing the belt is turned OFF), the routine returns.

If the result of step S301 is YES, the routine proceeds to step S302. It is determined whether or not the door located closest to the seatbelt device 1 is opened (the door opening sensor 39 is ON).

When the result of step S302 is NO (the door is closed), the routine proceeds to step S303 and waits for a predetermined amount of time ta. Further, the routine proceeds to step S304. An electric current is applied so that the motor 10 is rotated in the direction of normal rotation. On the other hand, when the result of step S302 is YES (the door is open), the routine proceeds to step S305 and waits for a predetermined amount of time tb. Further, the routine proceeds to step 304. An electric current is applied so that the motor 10 is rotated in the direction of normal rotation. By rotating the motor 10 in the direction of normal rotation, the belt reel 12 is rotated in the direction in which the belt reel 12 is rolled up.

The predetermined amount of time tb is set to be shorter than the predetermined amount of time ta (ta > tb). In other words, when the door is open, the waiting time is shorter than when the door is closed. Thus, the belt is rolled up more quickly.

Next, the routine proceeds from step S304 to step S306. The timer is initialized (T = T0). Time T is the time that has passed since the motor 10 started receiving electric current. The time keeping of time T begins.

Next, the routine proceeds to step S307. A threshold value Vstack used to determine whether the belt 5 is stuck is set to a predetermined value V1.

Next, the routine proceeds to step S308. The count value i is initialized to zero (i = 0).

Next, the routine proceeds to step S349. It is determined whether or not the count value i is smaller than a threshold value N which was set up in advance.

When the result of step S309 is YES (i < N), the routine proceeds to step S310. Based on the temporal change of the output signal of the rotational angle sensor 37, it is determined whether or not there is a change in the rotational angle of the belt reel 12.

When the result of step S310 is YES (there is a change), the routine proceeds to step S311. It is determined whether or not the direction of the change of the belt reel 12's rotational angle (in other words, the direction in which the belt reel 12 is rotated) detected from the temporal change of the output signal of the rotational angle sensor 37 is the same as the direction in which the belt is rolled up.

When the result of step S311 is YES (the direction is the same as the direction in which the belt is rolled up), the routine proceeds to step S312. The routine computes the angular velocity V at which the belt reel 12 is being rolled up. The angular velocity V at which the belt reel 12 is rolled up is computed by subtracting the angle (Xtᵢ₋₁) at which the belt reel 12 is rolled up, detected by the rotational angle sensor 37 when the routine was executed the last time, from the angle (Xtᵢ) at which the belt reel 12 is rolled up, detected by the rotational angle sensor 37 when the routine was executed this time (V = Xtᵢ - Xtᵢ₋₁).

Next, the routine proceeds from step S312 to step S313. It is determined whether or not the angular velocity V at which the belt reel 12 is rolled up, which was computed in step S312, is greater than the threshold value Vstack used to determine whether the belt is stuck, which was determined in step S307.

When the result of step S313 is YES (V > Vstack), it is concluded that the belt 5 is not stuck. The routine then proceeds to step S314.

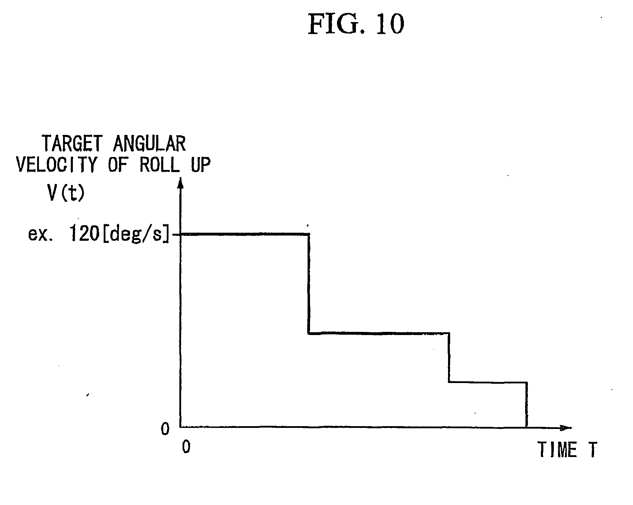

In step S314, it is determined whether or not the difference obtained by subtracting the target angular velocity of the roll up V(t) from the current angular velocity of rolling up the belt reel 12 V is greater than a predetermined value V2 (whether V - V(t) > V2). As shown in FIG. 10, the target angular velocity of the roll up V(t) is a velocity that was set up in advance according to the time T that has passed since the motor 10 started receiving electric current (in other words, the time passed since the timer started running in step S306). The target angular velocity of the roll up V(t) is set up so that it decreases step by step according to the time passed. The predetermined value V2 is a positive value which is greater than zero.

When the result of step S314 is YES (V - V(t) > V2), the routine proceeds to step S315. The routine suspends the electric current that was flowing through the motor 10 to rotate the motor in a direction of normal rotation. Further, the routine proceeds to step S316. An electric current is applied so that the motor 10 rotates in the opposite direction.

According to this embodiment, the angular velocity V of rolling up the belt reel 12 is greater than the target angular velocity of roll up V(t) by the predetermined value V2 or more. Thus, it is determined that the belt reel 12 is rotating at a rotational velocity that is greater than the rotational velocity of the rotation driven by the motor 10. Therefore, the rotation of the motor 10 in the direction of normal rotation is suspended. Instead, the motor 10 is rotated in the opposite direction.

By suspending the rotation of the motor 10 in the direction of normal rotation, it is possible to prevent the locking click 28 of the clutch 20 from moving closer to the ratchet tooth 19. Accordingly, it is possible to prevent the locking click 28 from hitting the ratchet tooth 19, as described above. Therefore, it is possible to prevent the triggering of hitting sounds, thus enhancing the merchantability of the seatbelt device.

By later rotating the motor 10 in the opposite direction, the clutch 20 is later released. Thus, it is possible to avoid any contact between the pawl 29 and the rink gear 18. As a result, the triggering of hitting sounds is prevented with certainty. At the same time, it is possible to lessen the resistance of the rotation of the rink gear 18.

On the other hand, when the result of step S314 is NO (V - V(t) ≤ V2), the routine proceeds to step S317. It is determined whether or not the current angular velocity V of rolling up the belt reel 12 is less than the value obtained by subtracting a predetermined value V3 from the target angular velocity of roll up V(t) (whether V < V(t) -V3).

When the result of step S317 is YES (V < V(t) - V3), the routine proceeds to step S318. The electric current I flowing through the motor 10 is increased by a predetermined amount ΔI (I = I +ΔI). The routine then proceeds to step S319.

When the result of step S317 is NO (V ≥ V(t) - V3), the amount of electric current which is presently applied to the motor 10 is maintained. The routine then proceeds to step S319. In other words, by processing steps S317 and S318, the routine controls the angular velocity V of rolling up the belt reel 12 so that the velocity V is approximately equal to the target angular velocity of roll up V(t).

In step S319, it is determined whether or not the position at which the belt reel 12 rolls up the belt is the position where the entire belt is rolled up (the position in which the belt is stored).

If the result of step S319 is YES (the position in which the belt is stored), the routine proceeds to step S320. The routine then suspends the electric current applied to the motor 10. Thus, the execution of the present routine is terminated.

When the result of step S319 is NO (not in the position in which the belt is stored), the routine returns to step S307.

When the result of step S310 is NO (the rotational angle has not changed), the routine proceeds to step S321. It is determined whether or not a predetermined amount of time has passed since the rotational angle of the belt reel 12 stopped changing.

When the result of step S321 is NO (a predetermined amount of time has not passed), the routine returns to step S309.

When the result of step S321 is YES (a predetermined amount of time has passed), the routine proceeds to step S322. It is concluded that the belt 5 is stuck somewhere. The routine then momentarily stops the motor 10, and proceeds to step S323. The routine then increases the counter value i by one (i = i + 1), and returns to step S309.

When the result of step S311 is NO (not in the direction of roll up) and when the result of step S313 is NO (V ≤ V(t)), the routine proceeds to step S322. It is concluded that either the belt 5 is stuck somewhere or the belt 5 has been pulled out. Thus, the motor 10 is suspended. Further, the routine proceeds to step S323. The counter value i is increased by one (i = i + 1). The routine then returns to step S309.

When the result of step S309 is NO (i ≥ N), the rolling up of the belt reel 12 by the motor 10 should not be assisted any longer. Therefore, the routine proceeds to step S320, and stops applying electric current to the motor 10. Accordingly, the execution of the present routine is terminated.

While a preferred embodiment of the present invention has been described above, it should be understood that these are exemplary of the invention and are not to be considered as limiting the present invention. For example, the clutch 20 is not limited to the structure of the embodiment described above. The clutch 20 may be structured differently as long as the clutch is structured to be engaged or released based on the relative rotation of the motor 10 and the belt reel 12. Accordingly, the invention is not to be considered as being limited by the foregoing description, and is only limited by the scope of the appended claims.

A seatbelt device (1) of a vehicle comprising: a belt reel (12) around which a belt (5) is rolled up; a motor (10) which is driven to rotate the belt reel (12) so that the belt (5) can be pulled in; a clutch (20) located between the belt reel (12) and the motor (10); a control unit (21) that controls the motor (10); a rotational position detection unit (37) that detects a rotational position of the belt reel (12); and a belt wearing state determination unit (35) that determines how the belt (5) is worn.

## Claims

1. A seatbelt device (1) of a vehicle comprising:
a belt reel (12) around which a belt (5) is rolled up;
a motor (10) which is driven to rotate the belt reel (12) so that the belt (5) can be pulled in;
a clutch (20) located between the belt reel (12) and the motor (10);
a control unit (21) that controls the motor (10);
a rotational position detection unit (37) that detects a rotational position of the belt reel (12); and
a belt wearing state determination unit (35) that determines how the belt (5) is worn, wherein
as the motor (10) rotates relative to the belt reel (12) in a direction of rolling up the belt (5), the clutch (20) engages and transmits a driving force of the motor (10) to the belt reel (12);
as the motor (10) rotates relative to the belt reel (12) in a direction of pulling out the belt (5), the clutch (20) releases and stops transmitting the driving force;
the seatbelt device (1) stores the belt (5) by driving the motor (10) while the belt wearing state determination unit (35) detects that the belt (5) is not worn;
**characterized in that**,
when the control unit (21) is controlling the storing of the belt (5), the control unit (21) stops driving the motor (10) in the direction of rolling up the belt (5) in the case where the rotational position detection unit (37) detects a velocity of rolling up the belt (5) that is greater by a predetermined value or more compared to a velocity at which the motor (10)'s driving force rolls up the belt (5); and
when the velocity of rolling up the belt (5) detected by the rotational position detection unit (37) is greater by a predetermined positive value or more compared to a target velocity of rolling up the belt (5), after a storing of the belt (5) begins and before the storing of the belt (5) is completed, the control unit (21) stops driving the motor (10) in the direction of rolling up the belt (5).

2. A seatbelt device (1) of a vehicle according to claim 1, wherein
the control unit (21) drives the motor (10) so that the motor (10) rotates in an opposite direction after the control unit (21) suspends the rotation of the motor (10) in the direction in which the belt (5) is rolled up.

3. A seatbelt device (1) of a vehicle according to claim 1, wherein the target velocity of rolling up the belt (5) decreases as time passes.

## Patentansprüche

1. Sicherheitsgurtvorrichtung (1) eines Fahrzeugs, welche umfasst:
eine Gurtrolle (12), um die herum ein Gurt (5) aufgerollt ist;
einen Motor (10), der zum Drehen der Gurtrolle (12) angetrieben ist, so dass der Gurt (5) eingezogen werden kann;
eine Kupplung (20), die zwischen der Gurtrolle (12) und dem Motor (10) angeordnet ist;
eine Steuereinheit (21), die den Motor (10) steuert/regelt;
eine Drehstellungserfassungseinheit (37), die eine Drehstellung der Gurtrolle (12) erfasst; und
eine Gurttragezustandbestimmungseinheit (35), die bestimmt, wie der Gurt (5) getragen wird, worin
wenn sich der Motor (10) relativ zu der Gurtrolle (12) in Aufrollrichtung des Gurts (5) dreht, die Kupplung (20) einrückt und eine Antriebskraft des Motors (10) auf die Gurtrolle (12) überträgt;
wenn sich der Motor (10) relativ zu der Gurtrolle (12) in Ausziehrichtung des Gurts (5) dreht, die Kupplung (20) ausrückt und die Antriebskraftübertragung stoppt;
die Sicherheitsgurtvorrichtung (1) den Gurt (5) durch Antrieb des Motors (10) speichert, während die Gurttragezustandbestimmungseinheit (35) erfasst, dass der Gurt (5) nicht getragen wird;
**dadurch gekennzeichnet, dass**
wenn die Steuereinheit (21) das Speichern des Gurts (5) steuert/regelt, die Steuereinheit (21) den Antrieb des Motors (10) in der Aufrollrichtung des Gurts (5) stoppt, falls die Drehstellungserfassungseinheit (37) erfasst, dass eine Aufrollgeschwindigkeit des Gurts (5) um einen vorbestimmten Wert oder mehr größer ist als eine Geschwindigkeit, mit der die Antriebskraft des Motors (10) den Gurt (5) aufrollt; und
wenn die von der Drehstellungserfassungseinheit (37) erfasste Aufrollgeschwindigkeit des Gurts (5) um einen vorbestimmten positiven Wert oder mehr größer ist als eine Sollaufrollgeschwindigkeit des Gurts (5), die Steuereinheit (21) den Antrieb des Motors (10) in der Aufrollrichtung des Gurts (5) stoppt, nachdem ein Speichern des Gurts (5) begonnen hat und bevor das Speichern des Gurts (5) abgeschlossen ist.

2. Sicherheitsgurtvorrichtung (1) eines Fahrzeugs nach Anspruch 1, worin die Steuereinheit (21) den Motor (10) so antreibt, dass sich der Motor (10) in entgegengesetzter Richtung dreht, nachdem die Steuereinheit (21) die Drehung des Motors (10) in der Aufrollrichtung des Gurts (5) ausgesetzt hat.

3. Sicherheitsgurtvorrichtung (1) eines Fahrzeugs nach Anspruch 1, worin die Sollaufrollgeschwindigkeit des Gurts (5) mit Ablauf der Zeit abnimmt.

## Revendications

1. Un dispositif de ceinture de sécurité (1) d'un véhicule comprenant :
un enrouleur (12) sur lequel une ceinture (5) est enroulée ;
un moteur (10) qui est entraîné pour faire tourner l'enrouleur (12) de telle sorte que la ceinture (5) puisse être rétractée ;
un embrayage (20) situé entre l'enrouleur (12) et le moteur (10) ;
une unité de commande (21) qui commande le moteur (10) ;
une unité de détection de position rotationnelle (37) qui détecte une position rotationnelle de l'enrouleur (12) ; et
une unité de détermination de l'état de port de la ceinture (35) qui détermine comment la ceinture (5) est portée, dans lequel
lorsque le moteur (10) tourne par rapport à l'enrouleur (12) dans une direction d'enroulement de la ceinture (5), l'embrayage (20) entre en prise et transmet une force d'entraînement du moteur (10) à l'enrouleur (12) ;
lorsque le moteur (10) tourne par rapport à l'enrouleur (12) dans une direction d'extraction de la ceinture (5), l'embrayage (20) se relâche et cesse de transmettre la force d'entraînement ;
le dispositif de ceinture de sécurité (1) rétracte la ceinture (5) par entraînement du moteur (10) tandis que l'unité de détermination de l'état de port de la ceinture (35) détecte que la ceinture (5) n'est pas portée,
**caractérisé en ce que**,
lorsque l'unité de commande (21) commande la rétraction de la ceinture (5), l'unité de commande (21) arrête d'entraîner le moteur (10) dans la direction de l'enroulement de la ceinture (5) dans le cas où l'unité de détection de la position rotationnelle (37) détecte une vitesse d'enroulement de la ceinture (5) qui est supérieure, d'une valeur préalablement déterminée ou plus, à une vitesse à laquelle la force d'entraînement du moteur (10) enroule la ceinture (5) ; et
lorsque la vitesse d'enroulement de la ceinture (5) détectée par l'unité de détection de la position rotationnelle (37) est supérieure, d'une valeur préalablement déterminée (1) ou plus, à une vitesse cible d'enroulement de la ceinture (5), après qu'une rétraction de la ceinture (5) a commencé et avant que la rétraction de la ceinture ne soit terminée, l'unité de commande (21) arrête d'entraîner le moteur (10) dans la direction de l'enroulement de la ceinture (5).

2. Un dispositif de ceinture de sécurité (1) d'un véhicule selon la revendication 1, dans lequel
l'unité de commande (21) entraîne le moteur (10) de telle sorte que le moteur (10) tourne dans une direction opposée après que l'unité de commande (21) a suspendu la rotation du moteur (10) dans la direction dans laquelle la ceinture (5) est enroulée.

3. Un dispositif de ceinture de sécurité (1) d'un véhicule selon la revendication 1, dans lequel la vitesse-cible d'enroulement de la ceinture (5) diminue avec le temps.
